# EUROPÄISCHE PATENTSCHRIFT

(11) **EP 4 170 832 B1**
(45) Veröffentlichungstag und Bekanntmachung des Hinweises auf die Patenterteilung: **07.05.2025**
(21) Anmeldenummer: 22187140.3
(22) Anmeldetag: 27.07.2022
(51) Int. Cl.: H01R 13/639, H01R 13/641

(54) **STECKVERBINDERANORDNUNG ZUM VERBINDEN VON SIGNALLEITERN**
CONNECTION SYSTEM FOR CONNECTING SIGNAL CONDUCTORS
DISPOSITIF CONNECTEUR ENFICHABLE PERMETTANT DE CONNECTER DES CONDUCTEURS DE SIGNAUX

(30) Priorität: 19.10.2021 DE 102021127033
(43) Veröffentlichungstag der Anmeldung: 26.04.2023
(73) Patentinhaber: MD Elektronik GmbH, 84478 Waldkraiburg (DE)
(72) Erfinder: Pritz, Helmut, 84539 Ampfing (DE); Halbig, Thomas, 92345 Dietfurt (DE)

(56) Entgegenhaltungen:
- JP-U- S63 128 674
- US-A- 5 035 644
- US-A- 5 376 017
- US-A- 5 782 647

## Beschreibung

### Technisches Gebiet

Die Erfindung betrifft eine Steckverbinderanordnung zum lösbaren Verbinden von, insbesondere elektrischen und optischen Signalleitern.

### Stand der Technik

Um eine lösbare Verbindung zwischen optischen oder elektrischen Leitern herzustellen, werden in der heutigen Zeit üblicherweise Steckverbindersysteme eingesetzt. Hierbei wird in der Regel auf ein Wirkprinzip zurückgegriffen, bei dem ein Steckpartner einen Rasthaken und ein Steckpartner eine Rastlasche aufweist. Zur mechanischen Verbindung beider Steckpartner wird der Rasthaken mit der Rastlasche verbunden. Sowohl der Rasthaken als auch die Rastlasche sind hierbei in der Regel an den Gehäusen der Steckpartner angeordnet. Zwar werden bei diesem Steckvorgang auch die Signalleiter leitend miteinander verbunden, doch erfolgt die primäre und mechanisch belastbare Verbindung in der Regel über die Gehäuse der Steckverbinder. Auf diese Weise ist es möglich Steckverbindersysteme bereitzustellen, die einen geringen Komplexitätsgrad aufweisen. Die Verbindung der Steckpartner über die Gehäuse besitzt jedoch den Nachteil, dass sich zusätzliche Positions- und Bauteiltoleranzen ergeben, die sich zu sehr großen Toleranzen aufsummieren können. Insbesondere wenn sehr hohe Signalraten über die optischen oder elektrischen Signalleiter übertragen werden sollen, kann hierbei das Problem auftreten, dass eine ausreichend stabile Verbindung der Signalleiter aufgrund der Toleranzschwankungen nicht immer sichergestellt werden kann. Es ist daher wünschenswert die Toleranzkette zwischen den zu verbindenden Signalleitern möglichst kurz zu halten und die zu verbindenden Signalleiter möglichst direkt miteinander mechanisch zu verbinden. Hierbei besteht jedoch der Nachteil, dass zusätzliche Funktionen, wie eine Positionssicherung, die ein ungewolltes Lösen der mechanischen Verbindung verhindern soll, aufgrund des erforderlichen komplexen Aufbaus der Steckverbindung nur schwer integrierbar sind.

JP S63 128 674 U offenbart ein Stecksystem, umfassend zwei miteinander verbindbare Stecker, die jeweils in miteinander verbindbaren Steckergehäusen angeordnet sind. Die Stecker weisen jeweils eine Durchgangsöffnung auf. Die Durchgangsöffnungen beider Stecker sind überlappend zueinander angeordnet, wenn die Stecker miteinander verbunden sind. Eines der beiden Steckergehäuse besitzt ein verschwenkbares Verriegelungselement mit einem Verschlussstift. Wenn die Steckergehäuse und die in den Steckergehäusen angeordneten Stecker miteinander verbunden sind, kann der Verschlussstift durch Verschwenken des Verriegelungselements in beiden Durchgangsöffnungen angeordnet werden.

US 5 035 644 A offenbart einen Bestätigungsmechanismus für eine elektrische Kupplung mit einem ersten und einem zweiten Verbindergehäuse, der geeignet ist, deine Verbindung des ersten und des zweiten Verbindergehäuses zu anzuzeigen und das erste und das zweite Verbindergehäuse doppelt zu verriegeln. Der Bestätigungsmechanismus umfasst: einen Verriegelungsarm mit einem Verriegelungsvorsprung, der an dem ersten Verbindergehäuse ausgebildet ist; einen Verriegelungshebel, der an seinem hinteren Ende schwenkbar mit dem ersten Verbindergehäuse verbunden ist und an seinem vorderen Ende mit einem isolierenden Vorsprung und an seinem vorderen Ende mit Verriegelungsfingern versehen ist, Verriegelungsvorsprünge, die an dem zweiten Verbindergehäuse ausgebildet sind, und einen Öffnungskontakt, der aus einem Paar von Kurzschlussanschlüssen gebildet ist, die in einer Kurzschlussanschlusskammer angeordnet sind, die in dem zweiten Verbindergehäuse ausgebildet ist. Die Verriegelungsfinger des Verriegelungshebels können in die Verriegelungsvorsprünge des zweiten Verbindergehäuses eingreifen. Der isolierende Vorsprung kann den Öffnungskontakt nur unterbrechen, wenn das erste und das zweite Verbindergehäuse verbunden sind.

US 5 782 647 A offenbart ein schwenkbares Element, das an einem weiblichen Gehäuse befestigt ist, das ein komplementäres männliches Gehäuse aufnehmen kann. Ein elastisches, U-förmiges Element ist zwischen einem Betätigungsabschnitt auf der Rückseite des schwenkbaren Elements und dem weiblichen Gehäuse angeordnet. Die Biegung des U-förmigen Elements ist in Richtung eines Drehpunkts angeordnet. Das elastische Element ist hinter dem schwenkbaren Element verborgen und befindet sich innerhalb des Gehäuses, so dass es nicht durch Teile anderer Steckverbinder, die mit ihm in einem einzigen Behälter transportiert werden, eingeklemmt werden kann.

US 5 376 017 A offenbart einen Hebel, der über eine Stützwelle drehbar an der Buchse angebracht ist. Der Hebel hat einen vorspringenden Teil, der in ein darin ausgebildetes Montageloch eintritt und gegen eine Strebe stößt, die in einem männlichen Verbinder zum Zeitpunkt der Montage ausgebildet ist, um dadurch den Hebel in die Betriebsposition zu drehen und die Strebe weiter zu drücken, wenn der Hebel aus der Betriebsposition gedreht wird, so dass der männliche Verbinder mit einem weiblichen Verbinder in Eingriff gebracht werden kann. Weiterhin ist ein erstes Verriegelungsmittel für die männlichen und weiblichen Verbinder angeordnet, um die Verbinder in der temporären Eingriffsposition zu verriegeln, wenn der Hebel in die Betriebsposition gedreht wird. Ein zweites orgesehen, um die Verbinder zu verriegeln, wenn der Hebel in die tatsächliche Eingriffsposition gedreht wird.

### Beschreibung der Erfindung

Es ist daher eine Aufgabe der vorliegenden Erfindung zumindest einen im Stand der Technik genannten Nachteil zu überwinden und eine Steckverbinderanordnung mit einer Positionssicherung bereitzustellen, bei der die Signalleiter zweier Steckpartner über eine möglichst kurze Toleranzkette miteinander verbindbar sind.

Die erfindungsgemäße Aufgabe wird durch eine Steckverbinderanordnung gemäß den Merkmalen des unabhängigen Anspruchs gelöst. Weitere vorteilhafte Ausführungsformen lassen sich den Unteransprüchen, der Beschreibung sowie den Zeichnungen entnehmen.

Eine erfindungsgemäße Steckverbinderanordnung weist einen Steckverbinder und einen Gegensteckverbinder auf. An dem Steckverbinder ist eine Hebeleinheit angeordnet. Die Hebeleinheit ist vorzugsweise lösbar am Steckverbinder angeordnet. Die Hebeleinheit kann als einseitiger oder als zweiseitiger Hebel ausgebildet sein. Die Hebeleinheit weist ein Verriegelungselement und ein Sicherungselement auf. Der Steckverbinder und der Gegensteckverbinder sind in eine Verbindungsposition bewegbar, in der der Steckverbinder und der Gegensteckverbinder leitend miteinander verbunden sind. Sowohl der Steckverbinder als auch der Gegensteckverbinder können einen oder auch mehrere Signalleiter aufweisen. Unter einer leitenden Verbindung kann in diesem Zusammenhang verstanden werden, dass eine Signalübertragung zwischen den Signalleitern des Steckverbinders und den Signalleitern des Gegensteckverbinders möglich ist. Der Steckverbinder und der Gegensteckverbinder weisen jeweils einen Kontaktträger auf. Sowohl der Kontaktträger des Steckverbinders als auch der Kontaktträger des Gegensteckverbinders weisen jeweils eine Aufnahmeöffnung auf. Die Kontaktträger dienen im Wesentlichen der Aufnahme der Signalleiter. Die Hebeleinheit ist in der Verbindungsposition zwischen einer Verriegelungsposition und einer Entriegelungsposition bewegbar. Hierzu kann die Hebeleinheit beispielsweise verschwenkbar an dem Steckverbinder angeordnet sein. Die Hebeleinheit kann hierzu einen Betätigungsabschnitt aufweisen, auf den eine Kraft erzeugt werden kann, um die Hebeleinheit zwischen der Verriegelungsposition und der Entriegelungsposition zu bewegen. Das Verriegelungselement ist in der Verriegelungsposition in den Aufnahmeöffnungen beider Kontaktträger angeordnet. Es ist daher bevorzugt, dass in der Verbindungsposition die Aufnahmeräume beider Kontaktträger fluchtend zueinander angeordnet sind. In der Entriegelungsposition ist das Verriegelungselement außerhalb der Aufnahmeöffnung zumindest eines Kontaktträgers angeordnet. Es ist an dieser Stelle bevorzugt, dass das Verriegelungselement in der Entriegelungsposition außerhalb der Aufnahmeöffnung des Gegensteckverbinders angeordnet ist. Die Hebeleinheit kann einen Wirkabschnitt aufweisen, in dem das Verriegelungselement angeordnet ist. Der Wirkabschnitt kann an den Betätigungsabschnitt angrenzen. Das Sicherungselement ist in der Verbindungsposition in eine Sperrstellung bewegbar, in der das Sicherungselement die Hebeleinheit in der Verriegelungsposition fixiert. Das Sicherungselement kann im Betätigungsabschnitt und/oder im Wirkabschnitt angeordnet sein.

Das Sicherungselement ist zwischen der Sperrstellung und einer Freigabestellung verschiebbar. Das Sicherungselement ist zumindest in der Verriegelungsposition parallel zur Steckachse zwischen der Sperrstellung und der Freigabestellung verschiebbar. In der Freigabestellung ist das Sicherungselement bevorzugt derart angeordnet, dass die Hebeleinheit aus der Verriegelungsposition in die Entriegelungsposition bewegbar ist, ohne durch das Sicherungselement blockiert zu werden. Das Sicherungselement kann darüber hinaus ein Betätigungselement aufweisen, mit dem das Sicherungselement zwischen der Sperrstellung und der Freigabestellung verschiebbar ist.

Durch die erfindungsgemäße Steckverbinderanordnung kann eine besonders zuverlässige und wenig störanfällige Verbindung zwischen zwei Signalleitern erzielt werden. Gleichzeitig kann mithilfe des Sicherungselements sichergestellt werden, dass eine durch die Hebeleinheit erzeugte Verbindung zwischen dem Steckverbinder und dem Gegensteckverbinder nicht ungewollt gelöst werden kann. Da sowohl das Verriegelungselement als auch das Sicherungselement durch die Hebeleinheit ausgebildet werden, kann darüber hinaus ein einfacher Aufbau der Steckverbinderanordnung sichergestellt werden.

Das Verriegelungselement kann auf einer ersten Seite der Hebeleinheit angeordnet sein. Die erste Seite ist bevorzugt dem Steckverbinder zugewandt. Weiterhin kann sich das Verriegelungselement senkrecht von der ersten Seite wegerstrecken. Das Sicherungselement kann auf einer der ersten Seite gegenüberliegenden zweiten Seite der Hebeleinheit angeordnet sein. Die erste und/oder die zweite Seite können parallel zu einer Steckachse der Steckverbinderanordnung angeordnet sein. Unter Steckachse kann in diesem Zusammenhang eine Richtungsachse verstanden werden, entlang derer der Steckverbinder in Relation zum Gegensteckverbinder bewegt wird, um den Steckverbinder und den Gegensteckverbinder in der Verbindungsposition anzuordnen. Die zweite Seite ist bevorzugt dem Steckverbinder abgewandt. Weiterhin kann die erste Seite parallel zur zweiten Seite angeordnet sein.

Der Steckverbinder kann in der Verbindungsposition teilweise innerhalb einer Steckkammer des Gegensteckverbinders angeordnet sein. Das Sicherungselement kann in der Sperrstellung an einer ersten Anschlagfläche der Steckkammer anliegen. Die erste Anschlagfläche verläuft bevorzugt parallel zur Steckachse und kann Teil der Innenwandung der Steckkammer sein. Es ist daher von besonderem Vorteil, wenn in der Verbindungsposition die Hebeleinheit zumindest teilweise innerhalb der Steckkammer angeordnet ist. Weiterhin kann das Sicherungselement mit einer Seite an der ersten Anschlagfläche anliegen, die der zweiten Seite der Hebeleinheit abgewandt ist.

Der Steckverbinder oder der Gegensteckverbinder können eine zweite Anschlagfläche aufweisen, die dazu ausgebildet ist an das Sicherungselement bei einer Bewegung der Hebeleinheit in der Verbindungsposition aus der Entriegelungsposition in die Verriegelungsposition anzuschlagen und das Sicherungselement aus der Sperrstellung heraus zu bewegen. Die zweite Anschlagfläche grenzt bevorzugt an die erste Anschlagfläche an. Die zweite Anschlagfläche ist weiterhin bevorzugt senkrecht zur ersten Anschlagfläche angeordnet. Vorzugsweise ist die Anschlagfläche derart ausgebildet, dass sich das Sicherungselement von der Anschlagfläche löst, bevor die Hebeleinheit die Verriegelungsposition erreicht, sodass das Sicherungselement in die Sperrstellung bewegbar ist, sobald die Hebeleinheit in der Verriegelungsstellung angeordnet ist. Das Sicherungselement kann durch eine elastische Verformung aus der Sperrstellung bewegt werden, sodass sich das Sicherungselement bei Erreichen der Verriegelungsposition von selbst in die Sperrstellung zurückbewegt.

Die Hebeleinheit kann ein Federelement aufweisen, das das Sicherungselement in der Freigabestellung in Richtung der Sperrstellung vorspannt. Das Federelement ist bevorzugt entspannt oder wirkt keine Kraft auf das Sicherungselement aus, wenn das Sicherungselement in der Sperrstellung angeordnet ist. Das Federelement kann an der zweiten Seite der Hebeleinheit angeordnet sein.

Die Hebeleinheit kann eine Führungsnut aufweisen, in der das Sicherungselement beweglich geführt ist. Die Führungsnut ist vorzugsweise auf der zweiten Seite der Hebeleinheit angeordnet. Weiterhin ist die Führungsnut bevorzugt parallel zur Steckachse angeordnet. Die Führungsnut ist bevorzugt auf einer der zweiten Seite abgewandten Seite geöffnet. Die Führungsnut ist bevorzugt sowohl im Wirkabschnitt als auch im Betätigungsabschnitt angeordnet.

Das Sicherungselement kann zumindest ein Rastelement aufweisen, das das Sicherungselement zumindest in der Sperrposition hält. Die Hebeleinheit weist bevorzugt ein Gegenrastelement auf, das mit dem Rastelement verbindbar ist. Noch bevorzugter weist die Hebeleinheit zwei Gegenrastelemente auf, die mit dem Rastelement verbindbar sind, wobei das Rastelement mit ersten Gegenrastelement verbindbar ist, wenn das Sicherungselement in der Sperrposition angeordnet ist und das Rastelement mit dem zweiten Gegenrastelement verbindbar ist, wenn das Sicherungselement in der Freigabestellung angeordnet ist.

Die Hebeleinheit kann zwischen einer Vorrastposition und einer Endrastposition bewegbar am Steckverbinder angeordnet sein. Weiterhin kann die Hebeleinheit ein Sekundärverriegelungselement aufweisen, das den Kontaktträger des Steckverbinders in der Endrastposition innerhalb des Steckverbinders fixiert. Es ist bevorzugt, dass das Sekundärverriegelungselement die Kontaktträger freigibt, sodass die Kontaktträger aus dem Steckverbinder entnommen werden können, sofern die Kontaktträger nicht durch ein anderes Befestigungsmittel im Steckverbinder fixiert sind. Die Hebeleinheit weist vorzugsweise Rastnasen auf, die mit ersten und zweiten Rastaufnahmen am Steckverbinder verbindbar sind. Vorzugsweise sind die Rastnasen in der Vorrastposition mit den ersten Rastaufnahmen und in der Endrastposition mit den zweiten Rastaufnahmen verbunden. Die Rastnasen sind bevorzugt in einer Ebene, die insbesondere senkrecht zur Steckachse angeordnet ist, mit dem Sekundärverriegelungselement angeordnet. Das Sekundärverriegelungselement kann an der ersten Seite der Hebeleinheit angeordnet sein und sich im Wesentlichen senkrecht von der ersten Seite wegerstrecken. Weiterhin kann das Sekundärverriegelungselement parallel zum Verriegelungselement angeordnet sein. Das Sekundärverriegelungselement kann einstückig mit dem Verriegelungselement ausgebildet sein. Die Hebeleinheit ist vorzugsweise in der Endrastposition zwischen der Verriegelungsposition und der Entriegelungsposition bewegbar.

Die Hebeleinheit kann als zweiseitiger Hebel ausgebildet sein, wobei eine Drehachse des zweiseitigen Hebels im Sekundärverriegelungselement oder in einer Ebene, die senkrecht zur Steckachse und parallel zu einer längsten Seite des Sekundärverriegelungselements angeordnet ist. Der Hebeleinheit kann durch das Sekundärverriegelungselement in den Betätigungsabschnitt und den Wirkabschnitt aufgeteilt sein.

Darüber hinaus sind weitere Vorteile und Merkmale der vorliegenden Erfindung aus der folgenden Beschreibung bevorzugter Ausführungsformen ersichtlich. Die dort und oben beschriebenen Merkmale können alleinstehend oder in Kombination umgesetzt werden, insofern sich die Merkmale nicht widersprechen. Die folgende Beschreibung der bevorzugten Ausführungsformen erfolgt dabei unter Bezugnahme auf die begleitenden Zeichnungen. Dabei zeigen:
- Figur 1: eine dreidimensionale Explosivdarstellung einer ersten Ausführungsform einer erfindungsgemäßen Steckverbinderanordnung
- Figur 2: eine Schnittansicht der erfindungsgemäßen Steckverbinderanordnung gemäß der ersten Ausführungsform, während eines Steckprozesses;
- Figur 3: eine Schnittansicht der erfindungsgemäßen Steckverbinderanordnung gemäß der ersten Ausführungsform mit einem Sicherungselement in einer Sperrstellung;
- Figur 4: eine Schnittansicht der erfindungsgemäßen Steckverbinderanordnung gemäß der ersten Ausführungsform mit dem Sicherungselement in einer Freigabestellung;
- Figur 5: eine Schnittansicht der erfindungsgemäßen Steckverbinderanordnung in einer zweiten Ausführungsform, während eines Steckprozesses;
- Figur 6: eine Schnittansicht der erfindungsgemäßen Steckverbinderanordnung gemäß der zweiten Ausführungsform mit dem Sicherungselement in der Sperrstellung;
- Figur 7: eine Schnittansicht der erfindungsgemäßen Steckverbinderanordnung gemäß der zweiten Ausführungsform mit dem Sicherungselement in der Freigabestellung;
- Figur 8: eine Schnittansicht einer nichterfindungsgemäßen Steckverbinderanordnung, während eines Steckprozesses;
- Figur 9: eine Schnittansicht der erfindungsgemäßen Steckverbinderanordnung gemäß der ersten Ausführungsform, wobei eine Hebeleinheit in einer Vorrastposition angeordnet ist; und
- Figur 10: eine Schnittansicht der erfindungsgemäßen Steckverbinderanordnung gemäß der ersten Ausführungsform, wobei die Hebeleinheit in einer Endrastposition angeordnet ist.

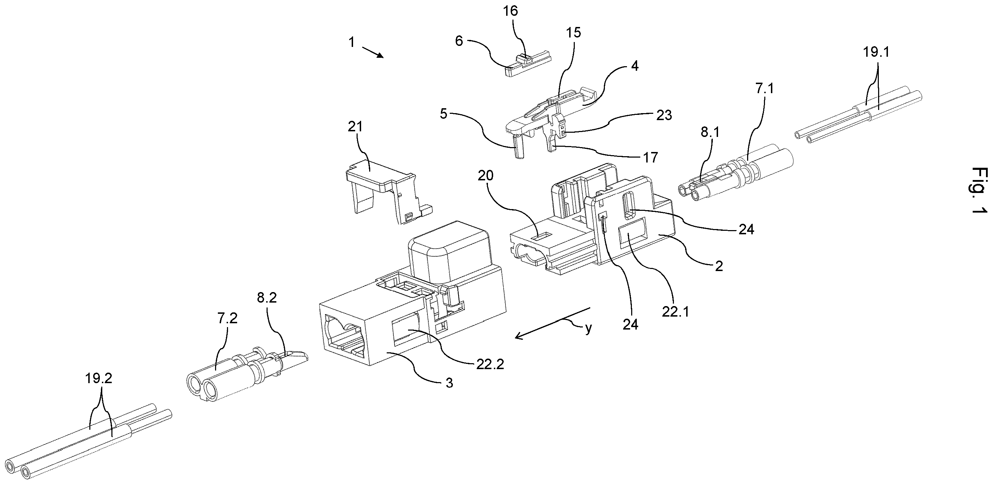

Figur 1 zeigt eine erste Ausführungsform einer erfindungsgemäßen Steckverbinderanordnung 1 in einer dreidimensionalen Explosivansicht. Die Steckverbinderanordnung 1 besitzt einen Steckverbinder 2 und einen Gegensteckverbinder 3. Der Steckverbinder 2 und der Gegensteckverbinder 3 besitzen jeweils einen Kontaktträger 7.1; 7.2. Der Kontaktträger 7.1 des Steckverbinders 2 und der Kontaktträger 7.2 des Gegensteckverbinders 3 besitzen jeweils zwei Signalleiter 19.1; 19.2. In der vorliegenden Ausführungsform handelt es sich bei den Signalleitern 19.1; 19.2 um Lichtwellenleiter zur Übertragung von Lichtsignalen. Der Kontaktträger 7.1 des Steckverbinders 2 wird mithilfe von Primärverriegelungen 22.1 am Steckverbinder 2 lösbar befestigt. Ebenso wird der Kontaktträger 7.2 des Gegensteckverbinders 3 mithilfe von Primärverriegelungen 22.2 am Gegensteckverbinder 3 befestigt. Der Kontaktträger 7.2 des Gegensteckverbinders 3 wird zusätzlich mithilfe einer Sekundärsicherung 21 an dem Gegensteckverbinder 3 befestigt. Der Steckverbinder 2 und der Gegensteckverbinder 3 können in einer Verbindungsposition mithilfe einer Hebeleinheit 4 lösbar verbunden werden. In der vorliegenden Ausführungsform ist die Hebeleinheit 4 als zweiseitiger Hebel ausgeführt. Die Hebeleinheit 4 ist in der vorliegenden Ausführungsform lösbar am Steckverbinder 2 angeordnet. Die Hebeleinheit 4 besitzt Rastnasen 23, die mit Rastaufnahmen 24 am Steckverbinder 2 verbindbar sind. Die Hebeleinheit 4 besitzt ein Verriegelungselement 5 mit dem die Kontaktträger 7.1; 7.2 von dem Steckverbinder 2 und dem Gegensteckverbinder 3 formschlüssig verbindbar sind. Weiterhin besitzt die Hebeleinheit 4 ein Sicherungselement 6, das zwischen einer Sperrstellung und einer Freigabestellung parallel zu einer Steckachse y bewegbar an der Hebeleinheit 4 angeordnet ist. Das Sicherungselement 6 ist hierzu in einer Führungsnut 15 geführt. Das Sicherungselement 6 besitzt darüber hinaus ein Betätigungselement 16, mit dem das Sicherungselement 6 zwischen der Sperrstellung und der Freigabestellung verschoben werden kann.

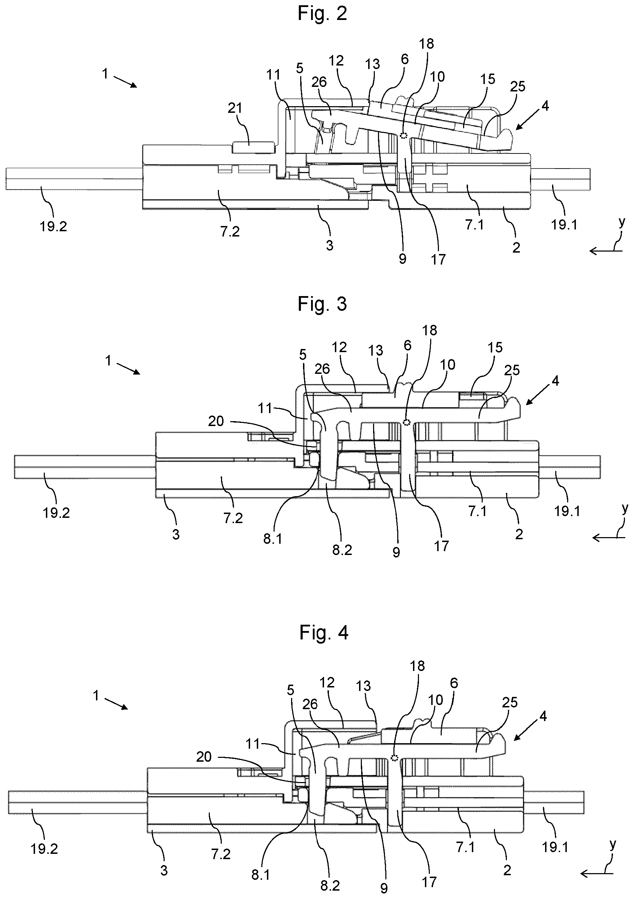

Figur 2 zeigt eine Schnittansicht der ersten Ausführungsform der erfindungsgemäßen Steckverbinderanordnung 1 während eines Steckprozesses des Steckverbinders 2 mit dem Gegensteckverbinder 3. Die Schnittebene der Schnittansicht verläuft parallel zur Steckachse y. Während des Steckprozesses werden der Steckverbinder 2 und der Gegensteckverbinder 3 entlang der Steckachse aufeinander zubewegt. Der Gegensteckverbinder 3 besitzt eine Steckkammer 11, in die der Steckverbinder 2 und die Hebeleinheit 4 teilweise eingebracht werden. Das Verriegelungselement 5 ist an einer ersten Seite 9 der Hebeleinheit 4 angeordnet. Das Sicherungselement 6 ist an einer zweiten Seite 10 der Hebeleinheit 4 angeordnet. An der ersten Seite 9 ist weiterhin ein Sekundärverriegelungselement 17 angeordnet. Die Führungsnut 15, das Sekundärverriegelungselement 17 und das Verriegelungselement 5 sind einstückig und materialeinheitlich mit der Hebeleinheit 4 ausgebildet. Durch den Steckprozess wird die Hebeleinheit 4 um eine Drehachse 18 in eine Entriegelungsposition ausgelenkt. Die Drehachse 18 wird innerhalb des Sekundärverriegelungselements 17 ausgebildet. Das Sekundärverriegelungselement 17 unterteilt die Hebeleinheit 4 in einen Betätigungsabschnitt 25 und einen Wirkabschnitt 26. Durch ein Drücken auf den Betätigungsabschnitt 25 kann der Wirkabschnitt 26 ausgelenkt werden. Das Verriegelungselement 5 ist im Wirkabschnitt 26 angeordnet. Die Führungsnut 15 erstreckt sich sowohl über den Betätigungsabschnitt 25 als auch den Wirkabschnitt 26, sodass auch das Sicherungselement 6 sowohl über den Betätigungsabschnitt 25 als auch den Wirkabschnitt 26 bewegbar ist. Durch das Auslenken der Hebeleinheit 4 während des Steckprozesses schlägt das Sicherungselement 6 an eine zweite Anschlagfläche 13 am Gegensteckverbinder 3 an. Wird der Steckverbinder 2 weiter in die Steckkammer 11 hinein bewegt, wird somit das Sicherungselement 6 aus der Sperrstellung in die Freigabestellung geschoben. Auf diese Weise wird sichergestellt, dass der Steckprozess nicht durch das Sicherungselement 6 behindert wird.

Figur 3 zeigt eine weitere Schnittansicht der ersten Ausführungsform der erfindungsgemäßen Steckverbinderanordnung 1, wobei die Schnittebene parallel zur Steckachse verläuft. Der Steckverbinder 2 und der Gegensteckverbinder 3 sind in einer Verbindungsposition angeordnet. In der Verbindungsposition sind die Signalleiter 19.1 des Steckverbinders 2 leitend mit den Signalleitern 19.2 des Gegensteckverbinders 3 verbunden, sodass Signale zwischen den Signalleitern 19.1; 19.2 übertragen werden können. Die Kontaktträger 7.1; 7.2 weisen jeweils eine Aufnahmeöffnung 8.1; 8.2 auf. Die Hebeleinheit 4 ist in einer Verriegelungsposition angeordnet. Das Verriegelungselement 5 ist innerhalb einer Durchgangsöffnung 20 sowie in beiden Aufnahmeöffnungen 8.1; 8.2 angeordnet. Somit ist der Steckverbinder 2 mit dem Gegensteckverbinder 3 formschlüssig, jedoch lösbar verbunden. Das Sicherungselement 6 ist in der Sperrstellung angeordnet. In der vorliegenden Ausführungsform liegt das Sicherungselement 6 in der Sperrstellung an einer ersten Anschlagfläche 12 innerhalb der Steckkammer 11 an. Die erste Anschlagfläche 12 bildet teilweise eine Innenwandung der Steckkammer 11 aus. Indem das Sicherungselement 6 in der Sperrstellung angeordnet ist, wird die Hebeleinheit 4 in der Verriegelungsposition blockiert. Das Sicherungselement 6 ist über ein nicht gezeigtes Rastelement mit der Führungsnut 15 verbunden, sodass sich das Sicherungselement 6 nicht von selbst aus der Sperrstellung herausbewegen kann.

Figur 4 zeigt eine weitere Schnittansicht der ersten Ausführungsform der erfindungsgemäßen Steckverbinderanordnung mit einer Schnittebene parallel zur Steckachse y. Der Steckverbinder 2 und der Gegensteckverbinder 3 sind in der Verbindungsposition angeordnet. Die Hebeleinheit 4 ist in der Verriegelungsposition angeordnet, wobei das Sicherungselement 6 in der Freigabestellung angeordnet ist. Die formschlüssige Verbindung zwischen dem Steckverbinder 2 und dem Gegensteckverbinder 3 kann daher gelöst werden, indem beispielsweise der Betätigungsabschnitt 25 der Hebeleinheit 4 in Richtung des Steckverbinders 2 gedrückt wird und somit die Hebeleinheit 4 in die Entriegelungsposition bewegt wird, in der das Verriegelungselement 5 innerhalb der Aufnahmeöffnung 8.1 des Steckverbinders 2 und innerhalb der Durchgangsöffnung 20 angeordnet ist.

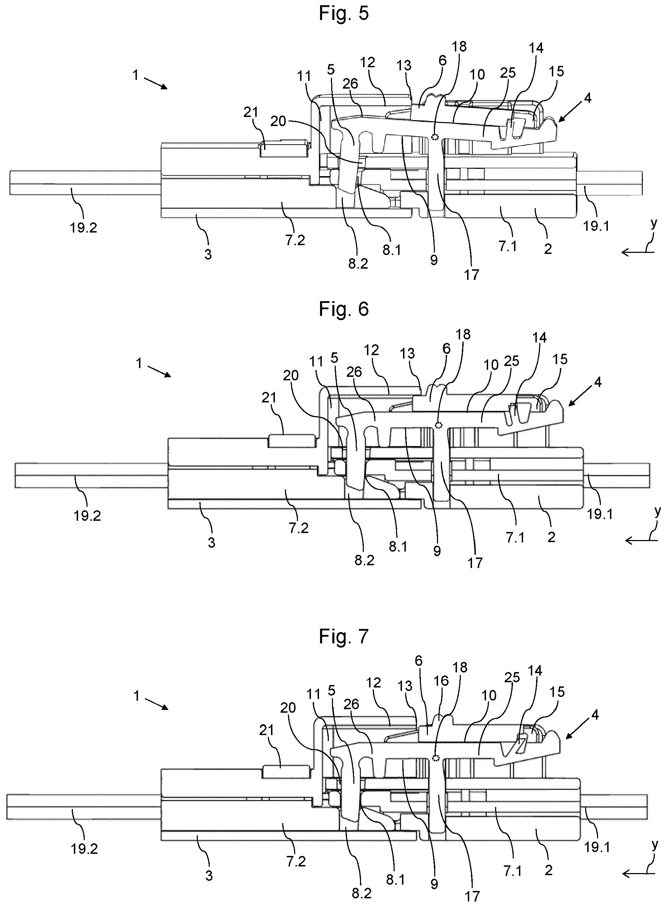

Figur 5 zeigt eine Schnittansicht einer zweiten Ausführungsform der erfindungsgemäßen Steckverbinderanordnung 1 während des Steckprozesses des Steckverbinders 2 mit dem Gegensteckverbinder 3. Die Schnittebene verläuft parallel zur Steckachse y. In der gezeigten Ansicht befindet sich die Hebeleinheit 4 in einer Bewegungsposition zwischen der Verriegelungsposition und der Entriegelungsposition. Die Hebeleinheit 4 besitzt ein Federelement 14. Durch den Steckprozess schlägt die Sicherungseinheit 6 an die zweite Anschlagfläche 13 des Gegensteckverbinders 3 an und wird in die Freigabestellung geschoben. Da das Federelement 14 an dem Sicherungselement 6 anliegt, wird das Federelement 14 elastisch ausgelenkt. Durch die Auslenkung spannt das Federelement 14 das Sicherungselement 6 in Richtung der Sperrstellung vor.

Figur 6 zeigt eine Schnittansicht der zweiten Ausführungsform der erfindungsgemäßen Steckverbinderanordnung 1 in der Verbindungsposition, wobei die Schnittebene parallel zur Steckachse y verläuft. Die Hebeleinheit 4 ist in der Verriegelungsposition angeordnet. Das Sicherungselement 6 ist in der Sperrstellung angeordnet und liegt an der zweiten Anschlagfläche 13 an. Durch das Federelement 14, das das Sicherungselement 6 in die Sperrstellung vorspannt, kann sich das Sicherungselement 6 von selbst in die Sperrstellung begeben, sobald sich die Hebeleinheit 4 in die Verriegelungsposition bewegt und sich das Sicherungselement 6 von der zweiten Anschlagfläche 13 löst.

Figur 7 zeigt eine weitere Schnittansicht der zweiten Ausführungsform der erfindungsgemäßen Steckverbinderanordnung 1 in der Verbindungsposition, wobei die Schnittebene parallel zur Steckachse y verläuft. Das Sicherungselement 6 ist in der Freigabestellung angeordnet. Durch das Bewegen des Sicherungselements 6 in die Freigabestellung ist wird das Federelement 14 erneut gegen das Sicherungselement 6 vorgespannt, sodass das Sicherungselement 6 nur durch eine von außen einwirkende Kraft in die Freigabestellung bewegt werden kann. Dies kann beispielsweise durch einen Monteur erfolgen, der an dem Betätigungselement 16 die Sicherungseinheit 6 in die Freigabestellung verschiebt.

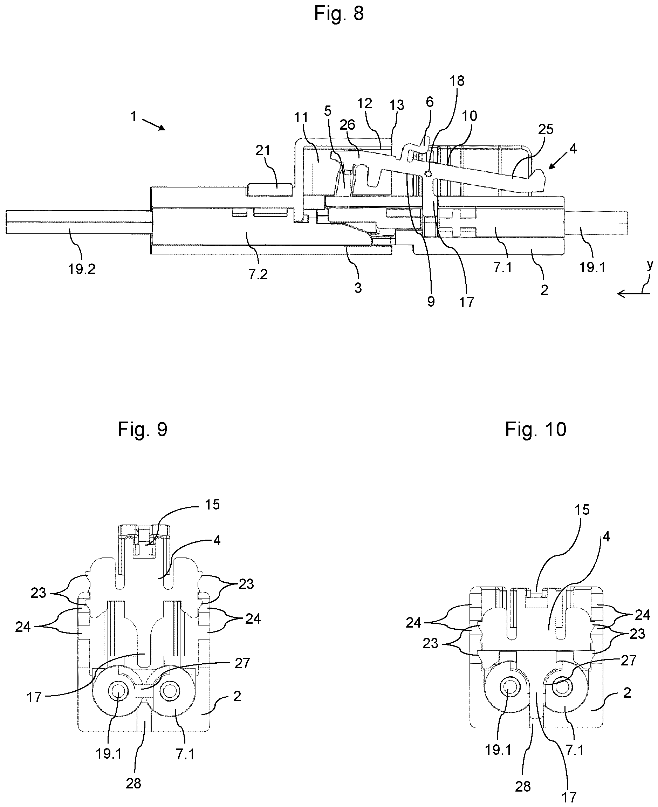

Figur 8 zeigt eine Schnittansicht einer Ausführungsform einer nichterfindungsgemäßen Steckverbinderanordnung 1 während des Steckprozesses des Steckverbinders 2 mit dem Gegensteckverbinder 3. Die Schnittebene verläuft parallel zur Steckachse y. Die Hebeleinheit 4 ist in der Entriegelungsposition angeordnet. Das Sicherungselement 6 ist einstückig mit der Hebeleinheit 4 ausgebildet und besitzt eine gewinkelte Form. Sobald der Steckverbinder 2 und der Gegensteckverbinder 3 in der Verbindungsposition und die Hebeleinheit 4 in der Verriegelungsposition angeordnet sind, liegt das Sicherungselement 6 an der ersten Anschlagfläche 12 an und blockiert somit die Hebeleinheit 4 in der Verriegelungsposition. Die Sicherungseinheit 6 kann durch elastisches Auslenken aus der Sperrstellung herausbewegt werden.

Figur 9 zeigt eine Schnittansicht der ersten Ausführungsform der erfindungsgemäßen Steckverbinderanordnung 1. Die Schnittebene verläuft senkrecht zur Steckachse y und durch das Sekundärverriegelungselement 17. Die Hebeleinheit 4 ist in einer Vorraststellung an dem Steckverbinder 2 befestigt. Die Hebeleinheit 4 ist hierzu mithilfe der Rastnasen 23 mit den Rastaufnahmen 24 des Steckverbinders 2 verbunden. Das Sekundärverriegelungselement 17 ist außerhalb eines Steckkanals 27 des Kontaktträgers 7.1 angeordnet, sodass der Kontaktträger 7.1 problemlos dem Steckverbinder 2 entnommen werden kann, sobald die Primärverriegelung von dem Kontaktträger 7.1 gelöst wird.

Figur 10 zeigt eine Schnittansicht der ersten Ausführungsform der erfindungsgemäßen Steckverbinderanordnung 1. Die Schnittebene verläuft senkrecht zur Steckachse y und durch das Sekundärverriegelungselement 17. Die Hebeleinheit 4 ist in einer Endraststellung angeordnet. Die Hebeleinheit 4 ist hierzu über weitere Rastaufnahmen 24 in dem Steckverbinder 2 mit den Rastnasen 23 verbunden. Das Sekundärverriegelungselement 17 ist innerhalb des Steckkanals 27 des Kontaktträgers 7.1 und innerhalb einer Fixierungsöffnung 28 im Steckverbinder 2 angeordnet, sodass der Kontaktträger 7.1 zusätzlich durch die in der Endrastposition befindliche Hebeleinheit 4 befestigt wird.

### BEZUGSZEICHENLISTE

- 1: Steckverbinderanordnung
- 2: Steckverbinder
- 3: Gegensteckverbinder
- 4: Hebeleinheit
- 5: Verriegelungselement
- 6: Sicherungselement
- 7: Kontaktträger
- 8: Aufnahmeöffnung
- 9: Erste Seite
- 10: Zweite Seite
- 11: Steckkammer
- 12: Erste Anschlagfläche
- 13: Zweite Anschlagfläche
- 14: Federelement
- 15: Führungsnut
- 16: Betätigungselement
- 17: Sekundärverriegelungselement
- 18: Drehachse
- 19: Signalleiter
- 20: Durchgangsöffnung
- 21: Sekundärsicherung
- 22: Primärverriegelung
- 23: Rastnase
- 24: Rastaufnahme
- 25: Betätigungsabschnitt
- 26: Wirkabschnitt
- 27: Steckkanal
- 28: Fixieröffnung

## Patentansprüche

1. Steckverbinderanordnung (1) mit:
einem Steckverbinder (2)
einem Gegensteckverbinder (3), und
einer an dem Steckverbinder (2) angeordneten Hebeleinheit (4), die ein Verriegelungselement (5) und ein Sicherungselement (6) aufweist,
wobei
der Steckverbinder (2) und der Gegensteckverbinder (3) in eine Verbindungsposition bewegbar sind, in der der Steckverbinder (2) und der Gegensteckverbinder (3) leitend miteinander verbunden sind,
der Steckverbinder (2) und der Gegensteckverbinder (3) jeweils einen Kontaktträger (7.1; 7.2) mit jeweils einer Aufnahmeöffnung (8.1; 8.2) aufweisen,
die Hebeleinheit (4) in der Verbindungsposition zwischen einer Verriegelungsposition und einer Entriegelungsposition bewegbar ist,
das Verriegelungselement (5) in der Verriegelungsposition in den Aufnahmeöffnungen (8.1; 8.2) beider Kontaktträger (7.1; 7.2) und in der Entriegelungsposition außerhalb der Aufnahmeöffnung (8.1; 8.2) zumindest eines Kontaktträgers (7.1; 7.2) angeordnet ist und
das Sicherungselement (6) in der Verbindungsposition in eine Sperrstellung bewegbar ist, in der das Sicherungselement (6) die Hebeleinheit (4) in der Verriegelungsposition fixiert, **dadurch gekennzeichnet, dass** das Sicherungselement (6) zumindest in der Verriegelungsposition zwischen der Sperrstellung und einer Freigabestellung, parallel zu einer Steckachse (x), verschiebbar ist.

2. Steckverbinderanordnung (1) nach dem vorhergehenden Anspruch, wobei das Verriegelungselement (5) auf einer ersten Seite (9) der Hebeleinheit (4) und das Sicherungselement (6) auf einer der ersten Seite (9) gegenüberliegenden zweiten Seite (10) der Hebeleinheit (4) angeordnet ist.

3. Steckverbinderanordnung (1) nach einem der vorhergehenden Ansprüche, wobei der Steckverbinder (2) in der Verbindungsposition teilweise innerhalb einer Steckkammer (11) des Gegensteckverbinders (3) angeordnet ist und das Sicherungselement (6) in der Sperrstellung an einer ersten Anschlagfläche (12) der Steckkammer (11) anliegt.

4. Steckverbinderanordnung (1) nach einem der vorhergehenden Ansprüche, wobei der Steckverbinder (2) oder der Gegensteckverbinder (3) eine zweite Anschlagfläche (13) aufweisen, die dazu ausgebildet ist an das Sicherungselement (6) bei einer Bewegung der Hebeleinheit (4) in der Verbindungsposition aus der Entriegelungsposition in die Verriegelungsposition anzuschlagen und das Sicherungselement (6) aus der Sperrstellung heraus zu bewegen.

5. Steckverbinderanordnung (1) nach einem der vorhergehenden Ansprüche, wobei die Hebeleinheit (4) ein Federelement (14) aufweist, das das Sicherungselement (6) in der Freigabestellung in Richtung der Sperrstellung vorspannt.

6. Steckverbinderanordnung (1) nach einem der vorhergehenden Ansprüche, wobei die Hebeleinheit (4) eine Führungsnut (15) aufweist, in der das Sicherungselement (6) beweglich geführt ist.

7. Steckverbinderanordnung (1) nach einem der vorhergehenden Ansprüche, wobei das Sicherungselement (6) zumindest ein Rastelement aufweist, das das Sicherungselement (6) zumindest in der Sperrposition hält.

8. Steckverbinderanordnung (1) nach einem der vorhergehenden Ansprüche, wobei die Hebeleinheit (4) zwischen einer Vorrastposition und einer Endrastposition bewegbar am Steckverbinder (2) angeordnet ist und ein Sekundärverriegelungselement (17) aufweist, das den Kontaktträger (7.1) des Steckverbinders (2) in der Endrastposition innerhalb des Steckverbinders (2) fixiert.

9. Steckverbinderanordnung (1) nach dem vorhergehenden Anspruch, wobei die Hebeleinheit (4) in der Endrastposition zwischen der Verriegelungsposition und der Entriegelungsposition bewegbar ist.

10. Steckverbinderanordnung (1) nach einem der Ansprüche 8 oder 9, wobei die Hebeleinheit (4) als zweiseitiger Hebel ausgebildet ist und eine Drehachse (18) des zweiseitigen Hebels im Sekundärverriegelungselement (17) angeordnet ist.

## Claims

1. Plug connector assembly (1) having:
a plug connector (2),
a mating plug connector (3), and
a lever unit (4) which is disposed on the plug connector (2) and has a locking element (5) and a securing element (6),
wherein
the plug connector (2) and the mating plug connector (3) are movable to a connecting position in which the plug connector (2) and the mating plug connector (3) are conductively connected,
the plug connector (2) and the mating plug connector (3) each have a contact carrier (7.1; 7.2) having in each case one receptacle opening (8.1; 8.2),
the lever unit (4) in the connecting position is movable between a locking position and an unlocking position,
the locking element (5) in the locking position is disposed in the receptacle openings (8.1; 8.2) of both contact carriers (7.1; 7.2), and in the unlocking position is disposed outside the receptacle opening (8.1; 8.2) of at least one contact carrier (7.1; 7.2), and
the locking element (6) in the connecting position is movable to a blocking position in which the securing element (6) fixes the lever unit (4) in the locking position, **characterized in that**
the locking element (6) at least in the locking position is displaceable parallel to a plug-in axis (x) between the blocking position and a releasing position.

2. Plug connector assembly (1) according to the preceding claim, wherein the locking element (5) is disposed on a first side (9) of the lever unit (4), and the securing element (6) is disposed on a second side (10) of the lever unit (4), opposite the first side (9).

3. Plug connector assembly (1) according to one of the preceding claims, wherein the plug connector (2) in the connecting position is partially disposed within a plug-in chamber (11) of the mating plug connector (3), and the securing element (6) in the blocking position rests on a first stop face (12) of the plug-in chamber (11).

4. Plug connector assembly (1) according to one of the preceding claims, wherein the plug connector (2) or the mating plug connector (3) has a second stop face (13) which, during a movement of the lever unit (4) in the connecting position from the unlocking position to the locking position, is designed to strike the securing element (6) and to move the securing element (6) from the blocking position.

5. Plug connector assembly (1) according to one of the preceding claims, wherein the lever unit (4) has a spring element (14) which pre-loads the securing element (6) in the releasing position in the direction of the blocking position.

6. Plug connector assembly (1) according to one of the preceding claims, wherein the lever unit (4) has a guide groove (15) in which the securing element (6) is movably guided.

7. Plug connector assembly (1) according to one of the preceding claims, wherein the securing element (6) has at least one latching element which holds the securing element (6) at least in the blocking position.

8. Plug connector assembly (1) according to one of the preceding claims, wherein the lever unit (4) between a preliminary latching position and a terminal latching position is movably disposed on the plug connector (2) and has a secondary locking element (17) which fixes the contact carrier (7.1) of the plug connector (2) in the terminal latching position within the plug connector (2).

9. Plug connector assembly (1) according to the preceding claim, wherein the lever unit (4) is movable in the terminal latching position between the locking position and the unlocking position.

10. Plug connector assembly (1) according to one of Claims 8 or 9, wherein the lever unit (4) is formed as a two-sided lever, and a rotation axis (18) of the two-sided lever is disposed in the secondary locking element (17).

## Revendications

1. Ensemble (1) formant connecteur enfichable, comprenant :
un connecteur (2),
un connecteur complémentaire (3), et
une unité (4) formant levier, agencée sur le connecteur (2), qui présente un élément de verrouillage (5) et un élément de sécurité (6),
dans lequel
le connecteur (2) et le connecteur complémentaire (3) sont aptes à être amenés dans une position de connexion dans laquelle le connecteur (2) et le connecteur complémentaire (3) sont connectés l'un à l'autre de manière conductrice,
le connecteur (2) et le connecteur complémentaire (3) comportent chacun un support de contact (7.1 ; 7.2) ayant une ouverture de réception (8.1 ; 8.2),
l'unité (4) formant levier est apte à être déplacée dans la position de connexion entre une position de verrouillage et une position de déverrouillage,
l'élément de verrouillage (5) est agencé dans les ouvertures de réception (8.1 ; 8.2) des deux supports de contact (7.1 ; 7.2) dans la position de verrouillage et à l'extérieur de l'ouverture de réception (8.1 ; 8.2) d'au moins un support de contact (7.1 ; 7.2) dans la position de déverrouillage, et
l'élément de sécurité (6) est apte à être déplacé dans la position de connexion vers une position de blocage dans laquelle l'élément de sécurité (6) fixe l'unité (4) formant levier dans la position de verrouillage, **caractérisé en ce que**
l'élément de sécurité (6) est apte à être déplacé au moins dans la position de verrouillage entre la position de blocage et une position de libération, parallèlement à un axe d'enfichage (x).

2. Ensemble (1) formant connecteur enfichable selon la revendication précédente, dans lequel l'élément de verrouillage (5) est agencé sur un premier côté (9) de l'unité (4) formant levier et l'élément de sécurité (6) est agencé sur un deuxième côté (10) de l'unité (4) formant levier opposé au premier côté (9).

3. Ensemble (1) formant connecteur enfichable selon l'une des revendications précédentes, dans lequel le connecteur (2) est partiellement agencé dans une chambre d'enfichage (11) du connecteur complémentaire (3) dans la position de connexion et l'élément de sécurité (6) repose contre une première surface de butée (12) de la chambre d'enfichage (11) dans la position de verrouillage.

4. Ensemble (1) formant connecteur enfichable selon l'une des revendications précédentes, dans lequel le connecteur (2) ou le connecteur complémentaire (3) présente une deuxième surface de butée (13) conçue pour venir buter contre l'élément de sécurité (6) lors d'un mouvement de l'unité (4) formant levier dans la position de connexion, de la position de déverrouillage à la position de verrouillage, et pour déplacer l'élément de sécurité (6) hors de la position de blocage.

5. Ensemble (1) formant connecteur enfichable selon l'une des revendications précédentes, dans lequel l'unité (4) formant levier comporte un élément élastique (14) qui précontraint l'élément de sécurité (6) dans la position de déverrouillage en direction de la position de verrouillage.

6. Ensemble (1) formant connecteur enfichable selon l'une des revendications précédentes, dans lequel l'unité (4) formant levier présente une rainure de guidage (15) dans laquelle l'élément de sécurité (6) est guidé de manière mobile.

7. Ensemble (1) formant connecteur enfichable selon l'une des revendications précédentes, dans lequel l'élément de sécurité (6) comporte au moins un élément d'encliquetage qui maintient l'élément de sécurité (6) au moins dans la position de verrouillage.

8. Ensemble (1) formant connecteur enfichable selon l'une des revendications précédentes, dans lequel l'unité (4) formant levier est agencée de manière mobile sur le connecteur (2) entre une position de pré-verrouillage et une position de verrouillage final et comporte un élément de verrouillage secondaire (17) qui fixe le support de contact (7.1) du connecteur (2) à l'intérieur du connecteur (2) dans la position de verrouillage final.

9. Ensemble (1) formant connecteur enfichable selon la revendication précédente, dans lequel l'unité (4) formant levier est apte à être déplacée dans la position de verrouillage final entre la position de verrouillage et la position de déverrouillage.

10. Ensemble (1) formant connecteur enfichable selon l'une des revendications 8 ou 9, dans lequel l'unité (4) formant levier est conçue comme un levier à deux côtés et un axe de rotation (18) du levier à deux côtés est agencé dans l'élément de verrouillage secondaire (17).
